**Europäisches Patentamt**

**European Patent Office**

**Office européen des brevets**

(19)

(11) Numéro de publication : **0 377 345 B1**

(12) **FASCICULE DE BREVET EUROPEEN**

(45) Date de publication du fascicule du brevet :
**22.07.92 Bulletin 92/30**

(51) Int. Cl.⁵ : **B60J 5/06,** B61D 19/00

(21) Numéro de dépôt : **89400016.5**

(22) Date de dépôt : **03.01.89**

(54) **Véhicule perfectionné muni d'éléments latéraux de fermeture coulissants.**

(43) Date de publication de la demande :
**11.07.90 Bulletin 90/28**

(45) Mention de la délivrance du brevet :
**22.07.92 Bulletin 92/30**

(84) Etats contractants désignés :
**AT BE CH DE ES FR GB GR IT LI LU NL SE**

(56) Documents cités :
**FR-A- 2 311 707
FR-A- 2 576 556
FR-A- 2 593 126
FR-A- 2 620 982**

(73) Titulaire : **Bizien, Yvon
Rue des vieilles Ursulines
F-29250 Saint Pol de Léon (FR)**

(72) Inventeur : **Bizien, Yvon
Rue des vieilles Ursulines
F-29250 Saint Pol de Léon (FR)**

(74) Mandataire : **Martin, Jean-Jacques et al
Cabinet REGIMBEAU 26, Avenue Kléber
F-75116 Paris (FR)**

## Description

La présente invention concerne les véhicules comportant deux caissons, dont l'un placé sur une remorque, pourvus chacun d'éléments latéraux de fermeture coulissant sur des rails horizontaux.

Elle concerne tout particulièrement les véhicules comportant des portes latérales coulissantes à plusieurs vantaux rigides adjacents.

La présente invention peut cependant trouver également application dans les véhicules comportant des rideaux latéraux coulissants.

La présente invention a notamment pour but de perfectionner le dispositif de translation pour portes coulissantes de véhicules à plusieurs vantaux adjacents, exposé dans le brevet français déposé le 24 mars 1978 sous le numéro 78 08645 et publié le 19 octobre 1979 sous le numéro FR-A-2 420 443.

On a décrit dans le brevet FR-A-2 420 443 un dispositif de translation pour portes coulissantes de véhicules comportant un rail supérieur rectiligne, des moyens solidaires de chaque vantail coopérant avec ce rail en vue de leur déplacement par rapport à celui-ci, un rail inférieur dont le chemin de roulement comprend des excroissances latérales de croisement placées au-dessous de la plateforme et parcourues par des galets supportant ledit vantail.

En outre, afin de limiter l'encombrement du rail supérieur rectiligne guidant et supportant les vantaux de portes, il a été proposé dans le brevet FR-A-2 420 443 d'associer à chaque vantail de porte une pièce fixée en partie supérieure de celui-ci et articulée autour d'un axe horizontal. Au cours des déplacements par translation de chaque vantail cette pièce est guidée dans le rail rectiligne supérieur et retient le vantail en position.

La structure des rails supérieur et inférieur décrite dans le brevet FR-A-2 420 443 permet de juxtaposer deux vantaux. Ainsi, le dispositif de translation proposé par le brevet FR-A-2 420 443 permet de dégager ou ouvrir la moitié des panneaux latéraux longitudinaux d'un véhicule en vue d'en faciliter le chargement ou le déchargement.

Dans la pratique, il serait largement souhaitable de permettre une ouverture totale des panneaux latéraux d'un véhicule, pour rendre encore plus aisé le chargement et le déchargement.

Les diverses tentatives jusqu'ici opérées dans ce sens n'ont cependant pas donné pleinement satisfaction.

On a par exemple décrit dans les documents GB-A-1 230 296 et DE-A-1 958 134 un véhicule comportant sur chaque face 4 vantaux coulissants dont le plus avant est muni sur l'extérieur de rails auxiliaires supérieur et inférieur, horizontaux et est de plus articulé autour d'un axe vertical sur la carrosserie du véhicule. Ainsi, le vantail le plus avant est adapté pour recevoir à coulissement les autres vantaux, sur les rails auxiliaires supérieur et inférieur précités, et permettre de transférer ces vantaux entre la cabine et la caisse du véhicule, transversalement à la direction de déplacement de ce dernier. La réalisation du vantail avant s'avère fort complexe dans la mesure où ce vantail doit être équipé, d'une part, de moyens de coulissement qui lui sont propres, d'autre part, de rails auxiliaires supérieur et inférieur pour recevoir les vantaux arrière. De plus, la disposition proposée dans les documents précités conduit à la réalisation d'un vantail avant volumineux en épaisseur, vu la nécessité de disposer de rails de support et de guidage pour les vantaux arrière qui diffèrent des rails de guidage et de support utilisés pour le vantail avant, de telle sorte que les rails guidant les vantaux arrière soient alignés avec les rails auxiliaires prévus sur le vantail avant.

Le Demandeur a lui-même proposé dans sa demande de brevet français déposée le 25 janvier 1985 sous le numéro 85 01063 et publiée le 1er août 1986 sous le numéro 2 576 556 un véhicule du type comportant des portes coulissantes à plusieurs vantaux adjacents, des rails supérieur et inférieur pour guider et supporter les vantaux de porte et des moyens support associés aux vantaux, coopérant avec les rails, pour permettre le déplacement par coulissement des vantaux le long des rails, comprenant en outre un cadre comportant des voies de guidage et de support respectivement supérieures et inférieures, aptes à coopérer avec les moyens support associés aux vantaux afin d'autoriser un déplacement par coulissement de ces derniers sur le cadre, le cadre étant de plus déplaçable entre une position de transport dans laquelle le cadre est plaqué contre la carrosserie du véhicule et une position d'utilisation dans laquelle les voies de guidage et de support sont alignées avec les rails supérieurs et inférieurs pour autoriser un transfert d'au moins un vantail sur le cadre. Cette structure permet de libérer plus de la moitié d'un côté du véhicule, mais ne permet cependant pas de libérer la totalité d'un côté de celui-ci. (Sauf toutefois, le cas échéant, lorsque l'on envisage de disposer un cadre à chaque extrémité d'un panneau latéral du véhicule, on peut alors ainsi ouvrir la totalité du panneau lorsque celui-ci comporte quatre vantaux, ces derniers étant déplacés par paire sur les cadres, comme cela est très clairement expliqué page 6, lignes 13 à 17 de FR-A-2 576 556).

La présente invention a maintenant pour but de proposer un nouveau dispositif robuste, économique et simple d'utilisation, permettant de dégager entièrement le côté d'un caisson de véhicule équipé d'éléments latéraux coulissants de fermeture, afin de faciliter le chargement et le déchargement de ce dernier.

Ce but est atteint, dans le cadre de la présente invention, à l'aide d'un véhicule comprenant deux caissons dont l'un placé sur une remorque, pourvu chacun d'éléments latéraux coulissant sur des rails horizontaux, caractérisé par le fait qu'il comprend, d'une part, des moyens élévateurs aptes à régler la hauteur et l'inclinaison de l'un au moins des caissons afin d'aligner les rails prévus respectivement sur les caissons et, d'autre part, des moyens supportés de façon escamotable sur l'un des caissons et adaptés pour être déployés, en alignement des rails prévus respectivement sur les deux caissons, pour permettre le transfert des éléments coulissants d'un caisson vers l'autre.

Divers modes de réalisation de l'invention sont précisés dans les revendications dépendantes.

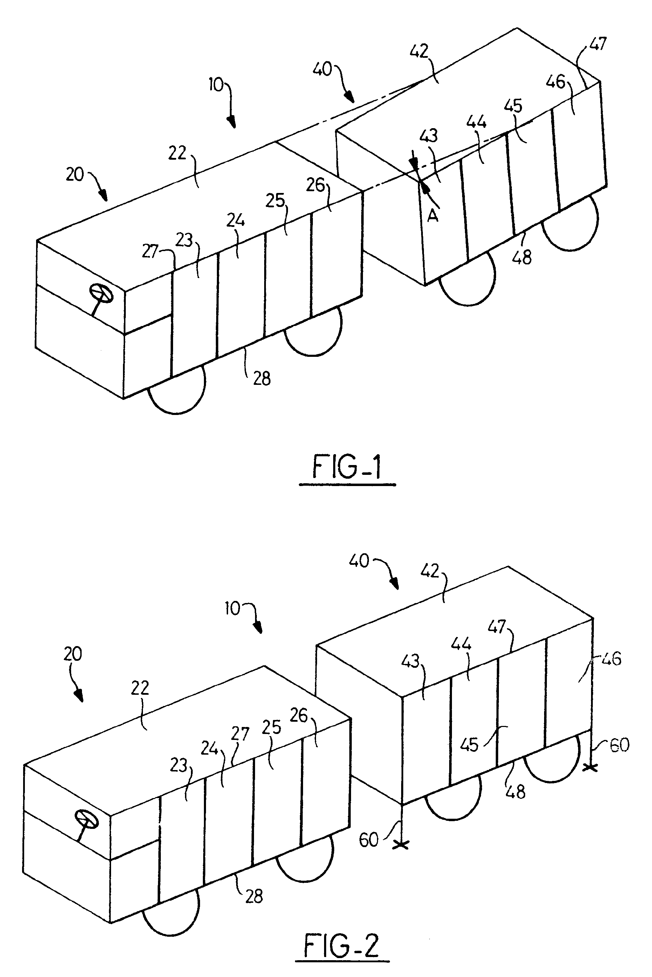

D'autres caractéristiques, buts et avantages de la présente invention apparaîtront à la lecture de la description détaillée qui va suivre, et en regard des dessins annexés, donnés à titre d'exemple non limitatif, sur lesquels les figures 1 à 4 représentent diverses étapes successives d'utilisation d'un dispositif conforme à la présente invention en vue de transférer les portes latérales coulissantes d'un caisson vers un autre.

On aperçoit sur la figure 1 annexée un véhicule 10 comprenant un élément tracteur 20 et une remorque 40 pourvus chacun d'un caisson 22, 42. Chacun des caissons 22, 42 comprend une pluralité de portes latérales coulissant sur des rails horizontaux.

On a ainsi illustré sur la figure 1 annexée 4 vantaux 23, 24, 25 et 26 du caisson tracté 22 coulissant sur des rails horizontaux 27 et 28, respectivement supérieur et inférieur. De façon similaire on a illustré 4 vantaux 43, 44, 45 et 46 du caisson remorqué 42 coulissant sur des rails horizontaux 47 et 48 respectivement supérieur et inférieur.

De préférence, les rails de guidage 27, 28, 47 et 48 sont conformes aux dispositions définies dans la demande de brevet précitée FR-A-2 420 443.

De ce fait, la structure des rails supérieur et inférieur 27, 28, 47 et 48 ne sera pas décrite en détail par la suite.

On notera néanmoins que, de préférence, les rails inférieurs 28 et 48 comprennent un chemin de roulement rectiligne limité extérieurement par un rebord et de place en place des excroissances situées du côté intérieur au-dessous de la bande de rive de la plateforme du véhicule, tandis que chaque vantail est supporté par des leviers munis d'une chape dans laquelle tourillonne un galet porteur roulant dans le rail inférieur.

Par ailleurs, de préférence, les rails supérieurs 27, 47 comprennent une gouttière ouverte vers le haut apte à guider et retenir une pièce articulée autour d'un axe horizontal sur la partie supérieure de chaque vantail.

Le véhicule 10 conforme à la présente invention comprend en outre des moyens élévateurs 60, schématiquement illustrés sur les figures annexées, aptes à régler la hauteur et l'inclinaison de l'un au moins des caissons 22 ou 42 afin d'aligner les rails 27, 47 et 28, 48 prévus sur ceux-ci.

Le véhicule 10 conforme à la présente invention comprend enfin des moyens, illustrés schématiquement sous la référence générale 80 sur les figures annexées, supportés de façon escamotable sur l'un des caissons et adaptés pour être déployés en alignement des rails 27, 47 et 28, 48 prévus respectivement sur les deux caissons pour permettre le transfert des portes coulissantes d'un caisson vers l'autre.

Sur les figures 2, 3 et 4 annexées on a illustré schématiquement les moyens élévateurs 60 au voisinage des coins inférieurs du caisson remorqué 42.

Bien entendu les moyens élévateurs 60 peuvent être prévus au niveau du caisson tracteur 22. De même les moyens élévateurs 60 peuvent être prévus au niveau du caisson remorqué 42 et du caisson tracteur 22.

De préférence les moyens élévateurs 60 sont formés de vérins pneumatiques. Les moyens élévateurs 60 peuvent être conformes au dispositifs classiques équipant actuellement les véhicules pour permettre leur alignement sur des quais de chargement et déchargement.

La structure des moyens élévateurs 60 ne sera donc pas décrite plus en détail par la suite.

Les moyens 80 supportés de façon escamotable sur l'un des caissons 22 ou 42 peuvent également faire l'objet de nombreuses variantes de réalisation.

De préférence ces moyens 80 sont formés d'un cadre monté à pivotement autour d'un axe vertical sur le coin d'un caisson, et pourvu d'un rail horizontal supérieur 82 et d'un rail horizontal inférieur 84 adaptés pour venir en alignement des rails 27, 47, d'une part, et 28, 48 d'autre part.

Pour l'essentiel, un tel cadre est conforme aux dispositions illustrés sur les figures 1 et 2 du document FR-A-2 576 556.

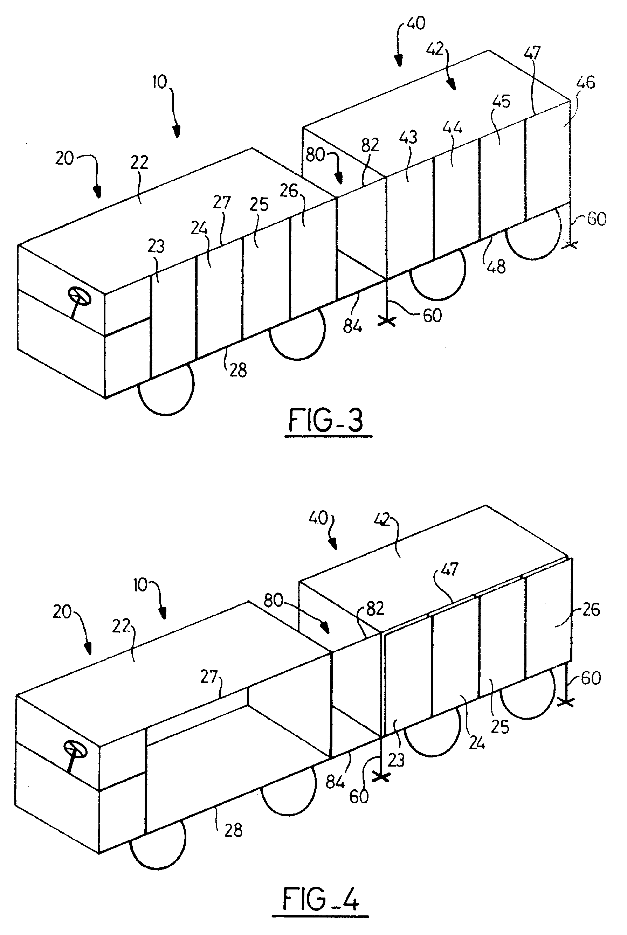

En variante, les moyens 80 peuvent être conformes aux dispositions illustrées sur les figures 3 à 10 du même document FR-A-2 576 556

En d'autres termes les moyens 80 peuvent comprendre un cadre pourvu d'un montant formé de différents segments pliables articulés autour d'axes horizontaux tels qu'illustrés sur les figures 3 et 4 du document FR-A-2 576 556.

Les moyens 80 peuvent également comprendre un cadre présentant deux montants pourvus chacun de charnières pour permettre d'articuler le cadre sur l'un ou l'autre des côtés du caisson, tel qu'illustré sur les figures 5 et 6 du document FR-A-2 576 556.

Les moyens 80 peuvent encore être formés d'un cadre possédant des voies de guidage respectivement supérieure et inférieure de longueur différente telles qu'illustré sur la figure 7 du document FR-A-2 576 556.

Les moyens 80 peuvent encore comprendre un cadre comprenant des voies de guidage horizontales composées de différentes sections rigides articulées entre elles autour d'axes verticaux tels qu'illustré sur la figure 8 du document FR-A-2 576 556.

Les moyens 80 peuvent enfin comprendre un cadre guidé à translation sur un caisson de véhicule et susceptible de pivotement par rapport à celui-ci tel qu'illustré sur les figures 9 et 10 du document FR-A-2 576 556.

De préférence les voies de guidage supérieure et inférieure 82, 84 des moyens 80 possèdent une longueur égale à l'intervalle nominal défini entre le caisson tracteur 22 et le caisson remorqué 42 de telle sorte que ces voies de guidage 82, 84 relient respectivement les paires de rails supérieurs 27, 47 et inférieurs 28, 48.

Cependant, le cas échéant, les voies de guidage 82, 84 des moyens 80 peuvent posséder une longueur inférieure à l'intervalle défini entre le caisson tracteur 22 et le caisson remorqué 42.

On va maintenant expliciter l'utilisation du dispositif conforme à la présente invention en regard des figures 1 à 4 annexées.

On a illustré schématiquement sur la figure 1 annexée un véhicule 10 comprenant un élément tracteur 20 et une remorque 40. En déplaçant le véhicule sur un trajet rectiligne, les axes longitudinaux du caisson tracteur 22 et du caisson remorqué 42 peuvent être aisément rendus coplanaires. Cependant, le terrain portant le véhicule et/ou l'équilibre du chargement et/ou l'état des suspensions du véhicule impose généralement un décalage en hauteur et/ou une inclinaison relative (référencée schématiquement A sur la figure 1) entre les deux caissons. En d'autres termes, au repos, les rails supérieurs 27 et 47, ainsi que les rails inférieurs 28 et 48 bien que coplanaires ne sont généralement pas alignés.

Dans un premier temps, comme illustré sur la figure 2, les moyens élévateurs 60 sont actionnés pour aligner, d'une part, les rails supérieurs 27, 47 entre eux, d'autre part, les rails inférieurs 28, 48 entre eux.

Dans un second temps, comme illustré sur la figure 3, les moyens 80 sont déployés entre les caissons 22, 42, dans l'alignement des rails 27, 47, 28 et 48. Par la suite, les portes coulissantes de l'un des caissons peuvent être transférées sur l'autre caisson, par l'intermédiaire des moyens 80, grâce aux propriétés des moyens définis dans le brevet FR-A-2 420 443, qui permettent de juxtaposer deux vantaux.

Sur la figure 4 on a ainsi illustré schématiquement les vantaux 23, 24, 25 et 26 du caisson tracteur 22, déplacés sur le caisson remorqué 42, en position adjacente aux vantaux 43, 44, 45 et 46 respectivement.

Dans un tel cas, l'un des côtés latéraux du caisson tracteur 22 est entièrement libéré.

Bien entendu, le cas échéant, les vantaux 43, 46 du caisson remorqué 42 pourraient être transférés inversement sur le caisson tracteur 22.

On notera que dans le cas où les moyens 80 comprennent un cadre présentant deux montants pourvus chacun de charnières pour permettre d'articuler le cadre sur l'un ou l'autre des côtés du caisson, tel qu'illustré sur les figures 5 et 6 du document FR-A-2 576 556, ces moyens 80 permettent de transférer des portes d'un côté sur l'autre d'un caisson.

Par ailleurs, la présente invention n'est pas limitée aux véhicules munis de portes latérales rigides. Elle s'applique également aux véhicules équipés de rideaux latéraux coulissants. La présente invention permet en effet de transférer des rideaux d'un caisson tracteur sur un caisson tracté ou inversement.

## Revendications

1. Véhicule comprenant deux caissons (22, 42) dont l'un placé sur une remorque (40), pourvus chacun d'éléments latéraux de fermeture (23, 24, 25, 26 ; 43, 44, 45, 46) coulissant sur des rails horizontaux (27, 28 ; 47, 48), caractérisé par le fait qu'il comprend :
   – des moyens élévateurs (60) aptes à régler la hauteur et l'inclinaison de l'un au moins des caissons (22, 42) afin d'aligner les rails (27, 28 ; 47, 48) prévus respectivement sur les caissons, et
   – des moyens (80) supportés de façon escamotable sur l'un des caissons (22, 42) et adaptés pour être déployés, en alignement des rails prévus respectivement sur les deux caissons, pour permettre le transfert des éléments latéraux coulissants d'un caisson vers l'autre.

2. Véhicule selon la revendication 1, caractérisé par le fait que les moyens élévateurs (60) comprennent des vérins pneumatiques.

3. Véhicule selon l'une des revendications 1 et 2, caractérisé par le fait que, en position déployée, les moyens escamotables (80) relient les rails alignés (27, 47 ; 28, 48) prévus respectivement sur les deux caissons.

4. Véhicule selon l'une des revendications 1 à 3, caractérisé par le fait que les moyens escamotables (80) comprennent une voie de guidage supérieure (82) et une voie de guidage inférieure (84) adaptées pour être alignées avec des rails horizontaux homologues (27, 47 ; 28, 48) prévus respectivement sur les caissons (22, 42).

5. Véhicule selon l'une des revendications 1 à 4, caractérisé par le fait que les moyens escamotables (80) sont portés par un caisson tracteur (22).

6. Véhicule selon l'une des revendications 1 à 4, caractérisé par le fait que les moyens escamotables (80) sont portés par un caisson remorqué (42).

7. Véhicule selon l'une des revendications 1 à 6, caractérisé par le fait que les moyens escamotables (80) comprennent un cadre possédant un montant formé de différents segments pliables articulés autour d'axes horizontaux.

8. Véhicule selon l'une des revendications 1 à 6, caractérisé par le fait que les moyens escamotables (80) comprennent un cadre pourvu de voies de guidage supérieures et de voies de guidage inférieures de longueur différente.

9. Véhicule selon l'une des revendications 1 à 6, caractérisé par le fait que les moyens escamotables (80) comprennent un cadre pourvu de voies de guidage supérieure et inférieure formées de différents segments pliables, articulés autour d'axes verticaux.

10. Véhicule selon l'une des revendications 1 à 6, caractérisé par le fait que les moyens escamotables (80) comprennent un cadre guidé à translation sur un caisson de véhicule est susceptible de pivotement par rapport à celui-ci.

11. Véhicule selon l'une des revendications 1 à 10, caractérisé par le fait que les éléments latéraux de fermeture coulissants (23, 24, 25, 26 ; 43, 44, 45, 46) sont formés de portes coulissantes à vantaux rigides.

12. Véhicule selon l'une des revendications 1 à 10, caractérisé par le fait que les éléments latéraux de fermeture coulissants (23, 24, 25, 26 ; 43, 44, 45, 46) sont formés de rideaux coulissants.

**Patentansprüche**

1. Fahrzeug mit zwei Kastenwagen (22, 42), von denen einer auf einem Anhänger (40) angeordnet ist, wobei beide seitliche Schließelemente (23, 24, 25, 26; 43, 44, 45, 46) aufweisen, die auf horizontalen Schienen (27, 28; 47, 48) geführt gleiten, gekennzeichnet durch

– eine Hebevorrichtung (60) zum Regeln der Höhe und der Neigung mindestens einer der Kastenwagen (22, 42), um die jeweils an den Kastenwagen vorgesehenen Schienen (27, 28; 47, 48) auszurichten, und

– einer einklappbar oder einziehbar von einem der Kastenwagen (22, 42) getragenen Vorrichtung, die ausgerichtet zu den jeweils an den beiden Kastenwagen vorgesehenen Schienen ausfahrbar ist, um die Verschiebung der gleitenden Seitenelemente von einem Kasten in Richtung zum anderen zuzulassen.

2. Fahrzeug nach Anspruch 1, dadurch gekennzeichnet, daß die Hebevorrichtung (60) pneumatische Wagenheber aufweist.

3. Fahrzeug nach Anspruch 1 oder 2, dadurch gekennzeichnet, daß die einziehbare Vorrichtung (80) in einer ausgefahrenen Position die jeweils an den beiden Kastenwagen vorgesehenen ausgerichteten Schienen (27, 47; 28, 48) verbindet.

4. Fahrzeug nach einem der Ansprüche 1 bis 3, dadurch gekennzeichnet, daß die einziehbare Vorrichtung (80) eine obere Führungsschiene (82) und eine untere Führungsschiene (84) aufweist, die mit den jeweils an den Kastenwagen (22, 42) vorgesehenen homologen, horizontalen Schienen (27, 47; 28, 48) ausrichtbar sind.

5. Fahrzeug nach einem der Ansprüche 1 bis 4, dadurch gekennzeichnet, daß die einziehbare Vorrichtung (80) von einem Zugwagen (22) getragen wird.

6. Fahrzeug nach einem der Ansprüche 1 bis 4, dadurch gekennzeichnet, daß die einziehbare Vorrichtung (80) von einem Anhänger-Wagen (42) getragen wird.

7. Fahrzeug nach einem der Ansprüche 1 bis 6, dadurch gekennzeichnet, daß die einziehbare Vorrichtung (80) einen Rahmen mit einer Stütze aufweist, die aus verschiedenen um horizontale Achsen zusammenlegbaren, gegliederten Segementen gebildet ist.

8. Fahrzeug nach einem der Ansprüche 1 bis 6, dadurch gekennzeichnet, daß die einziehbare Vorrichtung (80) einen Rahmen aufweist, an dem obere Führungsschienen und untere Führungsschienen unterschiedlicher Länge vorgesehen sind.

9. Fahrzeug nach einem der Ansprüche 1 bis 6, dadurch gekennzeichnet, daß die einziehbare Vorrichtung (80) einen Rahmen aufweist, an dem obere und untere Führungsschienen vorgesehen sind, die aus verschiedenen um vertikale Achsen zusammenlegbaren, gegliederten Segementen gebildet sind.

10. Fahrzeug nach einem der Ansprüche 1 bis 6, dadurch gekennzeichnet, daß die einziehbare Vorrichtung (80) einen translatorisch auf einem der Kastenwagen des Fahrzeugs geführten Rahmen aufweist und in Bezug auf diesen schwenkbar ist.

11. Fahrzeug nach einem der Ansprüche 1 bis 10, dadurch gekennzeichnet, daß die geführt gleitenden, seitlichen Schließelemente (23, 24, 25, 26; 43, 44, 45, 46) durch geführt gleitende Türen mit starren Türflügeln gebildet sind.

12. Fahrzeug nach einem der Ansprüche 1 bis 10, dadurch gekennzeichnet, daß die geführt gleitenden, seitlichen Schließelemente (23, 24, 25, 26; 43, 44, 45, 46) durch gleitende Vorhängen gebildet sind.

**Claims**

1. Vehicle comprising two crates (22, 42), one of which is placed on a trailer (40), each provided with lateral closure means (23, 24, 25, 26; 43, 44, 45, 46) sliding on horizontal rails (27, 28; 47, 48), characterized in that it comprises:

– lifting means (60) able to adjust the height and inclination of at least one of the crates (22, 42) in order to align the rails (27, 28; 47, 48) provided respectively on the crates, and

– means (80) retractably supported on one of the crates (22, 42) and adapted to extend, in alignment with the rails provided respectively on the two crates, to allow transfer of the lateral sliding means from one crate to the other.

2. Vehicle according to Claim 1, characterized in that the lifting means (60) comprise pneumatic jacks.

3. Vehicle according to either of Claims 1 and 2, characterized in that, in the extended position, the retractable means (80) connect the aligned rails (27, 47; 28, 48) provided respectively on the two crates.

4. Vehicle according to one of Claims 1 to 3, characterized in that the retractable means (80) comprise an upper guiding track (82) and a lower guiding track (84) adapted to be aligned with the homologous horizontal rails (27, 47; 28, 48) provided respectively on the crates (22, 42).

5. Vehicle according to one of Claims 1 to 4, characterized in that the retractable means (80) are borne by a towing crate (22).

6. Vehicle according to one of Claims 1 to 4, characterized in that the retractable means (80) are borne by a towed crate (42).

7. Vehicle according to one of Claims 1 to 6, characterized in that the retractable means (80) comprise a frame having an upright formed by various foldable segments articulated about horizontal axes.

8. Vehicle according to one of Claims 1 to 6, characterized in that the retractable means (80) comprise a frame provided with upper guiding tracks and with lower guiding tracks of different lengths.

9. Vehicle according to one of Claims 1 to 6, characterized in that the retractable means (80) comprise a frame provided with upper and lower guiding tracks formed by various foldable segments which are articulated about vertical axes.

10. Vehicle according to one of Claims 1 to 6, characterized in that the retractable means (80) comprise a frame guided in a translational movement on a vehicle crate and capable of pivoting with respect thereto.

11. Vehicle according to one of Claims 1 to 10, characterized in that the sliding lateral closure means (23, 24, 25, 26; 43, 44, 45, 46) are formed by sliding doors having rigid panels.

12. Vehicle according to one of Claims 1 to 10, characterized in that the sliding lateral closure means (23, 24, 25, 26; 43, 44, 45, 46) are formed by sliding curtains.

FIG-1

FIG-2

FIG-3

FIG-4